# EUROPÄISCHE PATENTSCHRIFT

(11) **EP 1 070 236 B1**
(45) Veröffentlichungstag und Bekanntmachung des Hinweises auf die Patenterteilung: **06.10.2004**
(21) Anmeldenummer: 99914557.6
(22) Anmeldetag: 29.03.1999
(51) Int. Cl.: G01L 1/22, G01L 1/20

(54) **VORRICHTUNG ZUM ABFRAGEN MEHRERER SENSORELEMENTE IN MATRIX-VERSCHALTUNG**
DEVICE FOR INTERROGATING SEVERAL SENSORS IN A MATRIX INTERCONNECTION
DISPOSITIF POUR INTERROGER PLUSIEURS ELEMENTS DE DETECTION EN CONFIGURATION DE CONNEXION MATRICIELLE

(30) Priorität: 08.04.1998 LU 90233
(43) Veröffentlichungstag der Anmeldung: 24.01.2001
(73) Patentinhaber: IEE INTERNATIONAL ELECTRONICS & ENGINEERING S.A., 6468 Echternach (LU)
(72) Erfinder: THINNES, Martin, D-54311 Trierweiler (DE)
(74) Vertreter: Beissel, Jean
(86) Internationale Anmeldenummer: PCT/EP1999/002145
(87) Internationale Veröffentlichungsnummer: WO 1999/053283

(56) Entgegenhaltungen:
- US-A- 4 734 034
- US-A- 5 083 467

## Beschreibung

Die vorliegende Erfindung betrifft eine Vorrichtung zum Abfragen mehrerer Sensorelemente mit variablem Widerstand in Matrix-Verschaltung.

Zur Abfrage, d.h. Auslesen von Sensorelementen mit variablem Widerstand, wie z.B. druckabhängigen oder temperaturabhängigen Widerständen, wird an das Sensorelement eine elektrische Testspannung angelegt und der aufgrund der angelegten Spannung fließende Strom gemessen. Auf diese Weise läßt sich der momentane elektrische Widerstand des Sensorelements errechnen und daraus die zu messende Größe (Druck, Temperatur etc.) ermitteln.

Will man mehrere derartige Sensorelemente selektiv auswerten, muß an jedes einzelne dieser Sensorelemente eine Testspannung angelegt werden und der über die einzelnen Sensorelemente abfließende Strom selektiv gemessen werden. Um hierbei die Zahl der äußeren elektrischen Anschlüsse zu reduzieren, werden die einzelnen Sensorelemente vorteilhaft in einer Matrix-Verschaltung betrieben. Dies bedeutet, daß bei einer Anzahl von n*m Sensorelementen, im wesentlichen n Zeilenleiter und m Spaltenleiter vorgesehen sind, wobei zwischen jeweils einem Zeilenleiter und einem Spaltenleiter eines der Sensorelemente verschaltet ist.

Es ist anzumerken, daß eine solche Matrix-Verschaltung eine schaltungstechnische Anordnung darstellt. Das heißt, daß eine Matrix-Verschaltung in einer realen Anordnung weder voraussetzt, daß die Sensorelemente in einer regelmäßigen Gitterverteilung angeordnet sein müssen, noch daß die einzelnen Verbindungsleiter geradlinig und parallel bzw. senkrecht zueinander verlaufen müssen.

Zum Auswerten einer Sensoranordnung in Matrix-Verschaltung wird folgendermaßen vorgegangen. Zunächst legt man die gesamte Matrix-Verschaltung mit Ausnahme eines ersten Spaltenleiters auf das gleiche Potential, z.B. auf Masse. An den ersten Spaltenleiter wird nun eine Testspannung angelegt und anschließend selektiv der an den einzelnen Zeilenleitern abfließende Strom gemessen. Auf diese Weise kann man selektiv die Widerstandswerte der zwischen dem ersten Spaltenleiter und den verschiedenen Zeilenleitern verschalteten Sensorelementen ermitteln. Wird diese Vorgehensweise für jeden der Spaltenleiter wiederholt, kann man sämtliche Sensorelemente nacheinander selektiv ausmessen. Es ist hier anzumerken, daß man alternativ die einzelnen Zeilenleiter mit der Testspannung beaufschlagen und den über die Sensorelemente abfließenden Strom an den Spaltenleitern messen kann um die einzelnen Sensorelemente abzufragen.

US-A-4 734 034 und US-A-5 083 467 beschreiben jeweils Vorrichtungen zum Abfragen einer Sensormatrix mit n Zeilenleitern und m Spaltenleitern, die Vorrichtungen umfassen gemäß US-A-4 734 034 n Treiberzellen zum Beauschlagen der n Zeilenleiter mit einer geeigneten Testspannung und einen mit den m Spaltenleitern verbundenen Meßwandler zum Umwandeln des über das jeweilige Sensorelement abfließenden Stroms in eine Meßspannung, und gemäß US-A-5 083 467 eine Treibervorrichtung zum Beauschlagen der n Zeilenleiter mit einer geeigneten Testspannung und eine mit den m Spaltenleitern verbundene Meßvorrichtung zum Umwandeln des über das jeweilige Sensorelement abfließenden Stroms in eine Meßspannung.

Bekannte Vorrichtungen zum Abfragen einer solchen Sensormatrix mit n Zeilenleitern und m Spaltenleitern umfassen demgemäß beispielsweise n Treiberzellen zum Beaufschlagen der n Zeilenleiter mit einer geeigneten Testspannung und m Meßwandler, z.B. Strom-Spannungswandler, an den m Spaltenleitern zum Umwandeln des über das jeweilige Sensorelement abfließenden Stroms in eine Meßspannung. Alternativ kann eine solche Vorrichtung auch m Treiberzellen zum Beaufschlagen der m Spaltenleiter mit einer geeigneten Testspannung und n Meßwandler an den n Zeilenleitern aufweisen.

Die einzelnen Meß- und Treiberzellen sind vorteilhaft in einem gemeinsamen Gehäuse angeordnet und mittels einer Steck- oder Klemmverbindung an eine Anschlußfahne der Sensormatrix anschließbar, an der die Anschlüsse für die einzelnen Zeilen- und Spaltenleiter angeordnet sind.

Ein Problem bei den bekannten Vorrichtungen zum Abfragen mehrerer Sensorelemente in Matrix-Verschaltung liegt in ihrem konstruktionsbedingten Mangel an Flexibilität beim Einsatz an Sensormatrizen mit unterschiedlicher Anschlußbelegung. In der Tat müssen die bekannten Vorrichtungen jeweils auf die spezielle Anordnung der Anschlüsse der Zeilen- und Spaltenleiter an der Anschlußfahne der Sensormatrix abgestimmt werden, so daß beim Anschluß an die Sensormatrix sichergestellt ist. daß die Zeilenleiter jeweils an eine Treiberzelle und die Spaltenleiter jeweils an einen Meßwandler angeschlossen werden. Es ist daher notwendig, für Sensormatrizen, die unterschiedliche Anschlußbelegungen an ihren Anschlußfahnen aufweisen, unterschiedliche Vorrichtungen zum Abfragen der jeweiligen Sensormatrix bereitzustellen.

Dies ist besonders nachteilig bei der Verwendung von Sensormatrizen als Sitzbelegungssensor im Automobilbau, bei der eine Sensormatrix in den Fahrzeugsitz integriert ist, um eine Belegung des Sitzes zu erkennen und dementsprechend ein Rückhaltesystem wie z.B. einen Airbag zu steuern. Bei diesem Einsatz als Sitzbelegungssensor muß die Form der Sensormatrizen und entsprechend die Leitungsführung an die Form des jeweiligen Fahrzeugsitzes speziell angepaßt werden und daher ist eine einheitliche Anschlußbelegung der Zeiten- und Spaltenleiter an der jeweiligen Anschlußfahne unterschiedlicher Sensormatrizen nicht immer möglich. Es muß daher im wesentlichen für jeden unterschiedlichen Fahrzeugsitz mit der entsprechenden angepaßten Sensormatrix eine eigene Vorrichtung zum Auswerten dieser Sensormatrix hergestellt werden, was natürlich die Herstellungskosten einer derartigen Sicherheitseinrichtung negativ beeinflußt.

Aufgabe der vorliegenden Erfindung ist es folglich, eine Vorrichtung zum Abfragen mehrerer Sensorelemente in Matrix-Verschaltung vorzuschlagen, die einen flexiblen Einsatz an Sensormatrizen mit unterschiedlicher Anschlußbelegung ermöglicht.

Diese Aufgabe wird erfindungsgemäß gelöst durch eine Vorrichtung zum Abfragen mehrerer Sensorelemente in Matrix-Verschaltung, wobei die Matrix-Verschaltung n Zeilenleiter und m Spaltenleiter aufweist, mit n+m Ansteuervorrichtungen, die an die n Zeilenleiter und an die m Spaltenleiter anschließbar sind, wobei jede Ansteuervorrichtung derart individuell umschaltbar ausgestaltet ist, daß sie in einem ersten Modus als Treiberzelle zum Beaufschlagen des anzuschließenden Zeilen- bzw. Spaltenleiters mit einer elektrischen Treibspannung und in einem zweiten Modus als Meßwandler zum Verarbeiten des Signals an dem anzuschließenden Spalten- bzw. Zeilenleiter arbeitet.

Mit dieser Vorrichtung kann eine Sensormatrix mit bis zu n*m Sensorelementen abgefragt werden, wobei die Anordnung der Anschlüsse für die Zeilen- und Spaltenleiter an der Anschlußfahne der Sensormatrix keine Rolle spielt. Die Vorrichtung kann also völlig unabhängig von der Form und Ausgestaltung der speziellen Sensormatrix hergestellt werden und erst zu einem späteren Zeitpunkt durch geeignetes Schalten der einzelnen Ansteuervorrichtungen an die spezielle Sensormatrix angepaßt werden. Die Vorrichtung zum Abfragen der Sensorelemente kann folglich wesentlich flexibler an ganz unterschiedlichen Sensormatrizen eingesetzt werden, wobei selbst die Aufteilung der Sensormatrix in Zeilen- und Spaltenleiter verändert werden kann. So kann mit einer Vorrichtung mit 10 Ansteuervorrichtungen ebensogut eine (6 x 4)-Matrix wie eine (5 x 5)-Matrix abgefragt werden. Es genügt hierzu lediglich die verschiedenen Ansteuervorrichtungen in den jeweils benötigten Modus zu schalten.

Die Vorrichtung zum Abfragen der Sensorelemente kann demnach als Standardbauteil an einer Vielzahl von unterschiedlichen Sensormatrizen eingesetzt werden, wodurch sich die Herstellungskosten der ganzen Sensoreinrichtung deutlich verringern.

Es ist anzumerken, daß mit einer Vorrichtung mit n+m Ansteuervorrichtungen bis zu n*m Sensorelemente in einer Matrix-Verschaltung mit n Zeilenleitern und m Spaltenleitern abfragbar sind, daß aber ebensogut weniger Sensorelemente in der Matrix-Verschaltung angeordnet sein können.

Weiterhin ist zu bemerken, daß bei der vorgeschlagenen Vorrichtung in einem ersten Modus die angeschlossenen Zeilenleiter mit einer Treiberspannung beaufschlagt werden und an den angeschlossenen Spaltenleitern gemessen wird, während in einem zweiten Modus die angeschlossenen Spaltenleiter mit der Treiberspannung beaufschlagt werden und an den angeschlossenen Zeilenleitern gemessen wird. Dies ist besonders vorteilhaft bei Sensormatrizen, die zur Überwachung von Leiterbrüchen beispielsweise Dioden aufweisen, die zwischen dem letzten Zeilenleiter und den jeweiligen Spaltenleitern und zwischen dem letzten Spaltenleiter und den jeweiligen Zeilenleitern verschaltet sind. Zum normalen Abfragen der Sensorelemente in der Matrix-Verschaltung wird diese dann derart beaufschlagt, daß die Dioden in Sperrichtung betrieben werden, während die Matrix-Verschaltung zur Überprüfung der Intaktheit der Leiter in umgekehrter Richtung beaufschlagt wird, d.h. in Durchlaßrichtung der Dioden, so daß eine Durchgangsprüfung erfolgen kann.

In einer bevorzugten Ausgestaltung der Erfindung, umfaßt jede Ansteuervorrichtung einen gegengekoppelten Verstärker, wobei der invertierende Eingang des Verstärkers an den jeweiligen Zeilen- bzw. Spaltenleiter anschließbar ist und der nicht-invertierende Eingang des Verstärkers zwischen einer Treiberspannung und einem Referenzpotential umschaltbar ist. Der gegengekoppelte Verstärker umfaßt dabei beispielsweise einen linearen oder logarithmischen Operationsverstärker.

Bei dieser Ausgestaltung nutzt man das Prinzip aus, daß ein solcher gegengekoppelter Verstärker immer versucht, die Spannungsdifferenz zwischen dem invertierenden und dem nicht invertierenden Eingang zu Null zu machen. Soll eine bestimmte Ansteuervorrichtung demnach als Treiberzelle arbeiten, schaltet man den nicht-invertierenden Eingang des jeweiligen Verstärkers auf die Treiberspannung. Der gegengekoppelte Verstärker treibt dann über den Gegenkopplungswiderstand die an dem invertierenden Eingang angeschlossene Zeile bzw. Spalte. Soll die Ansteuervorrichtung hingegen als Meßwandler arbeiten, wird der nicht-invertierende Eingang des Verstärkers auf das Referenzpotential, z.B. die Masse, geschaltet. Der Verstärker arbeitet dann als Strom-Spannungswandler, der den über die angeschlossene Zeile bzw. Spalte fließenden Strom, d.h. den Strom, der über das zu messende Sensorelement abfließt, in eine dem Widerstand des Sensorelements proportionale Ausgangsspannung umwandelt.

Die Verwendung von linearen Operationsverstärkern ermöglicht dabei, den gesamten Meßbereich linear abzufragen. Setzt man hingegen logarithmisch gegengekoppelte Operationsverstärker ein, kann der abzufragende Meßbereich der Vorrichtung vergrößert werden. wobei die Gegenkopplung derart dimensioniert werden kann, daß der besonders interessierende Bereich mit genügend hoher Auflösung ausgewertet wird.

Mit Hilfe der gegengekoppelten Verstärker läßt sich auf diese Weise eine sehr einfache und kostengünstige Ausgestaltung der Vorrichtung realisieren, die sich zudem leicht integrieren läßt.

In einer vorteilhaften Variante ist der Widerstandswert eines Gegenkopplungswiderstands, der bei jedem gegengekoppelten Verstärker zwischen dem invertierenden Eingang und dem Ausgang des Verstärkers verschaltet ist, veränderbar. Die Veränderung des Widerstandswerts des Gegenkopplungswiderstands kann beispielsweise durch eine Parallelschaltung von mehreren Einzelwiderständen erfolgen.

Hierdurch läßt sich vorteilhaft die Meßempfindlichkeit der als Meßwandler geschalteten Ansteuervorrichtungen verändern, so daß eine hohe Genauigkeit bei der Messung erreicht wird. weiterhin läßt sich mit den variablen Gegenkopplungswiderständen an den als Treiberzellen geschalteten Ansteuervorrichtungen der in die Sensormatrix hineinfließende Strom regeln.

Werden beispielsweise niederohmige Widerstandswerte der Sensorelemente gemessen, dann ist der Gegenkopplungswiderstand an der Treiberzelle unter Umständen zu hoch, um einen ausreichenden Treiberstrom an die angeschlossene Zeile bzw. Spalte zu liefern, da die gesamte Ausgangsspannung des Treiberverstärkers am Widerstand abfällt. In diesem Fall wird dem Gegenkopplungswiderstand ein weiterer Widerstand parallel geschaltet, so daß der Spannungsabfall im Gegenkopplungszweig entsprechend kleiner wird.

Durch richtige Dimensionierung der Widerstände im Gegenkopplungszweig kann weiterhin der in die Matrix fließende Strom begrenzt werden, so daß die maximal zulässigen Grenzwerte (maximaler Strom durch die Widerstandsmatrix, maximale zulässige Verlustleistung in der Widerstandsmatrix) eingehalten werden.

Durch entsprechende Dimensionierung des Widerstandes kann ebenfalls verhindert werden, daß bei kleinen zu messenden Widerstandswerten das Sensorelement, den Meßverstärker übersteuert. Werden die zu messenden Widerstandswerte kleiner, dann fließt ein größerer Strom in die Widerstandsmatrix. Durch den größeren Strom wird der Spannungsabfall im Gegenkopplungszweig des Treiberverstärkers größer, was zur Folge hat, daß an der an der Treiberzelle angeschlossenen Spalte bzw. Zeile eine kleinere Spannung anliegt. Da jetzt mit einer kleineren Spannung gemessen wird, sättigt der Ausgang des Meßverstärkers nicht mehr.

Das Hinzu- bzw. Abschalten verschiedener Einzelwiderstände erfolgt vorzugsweise mittels elektronisch gesteuerter Schalter. Hierdurch wird ein Verändern der Gegenkopplung während eines Meßzyklus möglich, z.B. durch Ansteuerung über eine Mikroprozessor, so daß eine dynamische und flexible Auswertung der einzelnen Sensorelemente ermöglicht wird.

Das Referenzpotential ist vorzugsweise von der Masse verschieden und liegt zwischen der Masse und der Versorgungsspannung der Schaltung. Ein typischer Wert für das Referenzpotential liegt beispielsweise bei der halben Versorgungsspannung. Dies ist besonders vorteilhaft bei Sensormatrizen, die zur Überprüfung von Leitungsbrüchen beispielsweise Dioden aufweisen, die zwischen dem letzten Zeilenleiter und den jeweiligen Spaltenleitern und zwischen dem letzten Spaltenleiter und den jeweiligen Zeilenleitern verschaltet sind. Zur Überwachung eines Leiters der Matrix-Verschaltung legt man den nicht-invertierenden Eingang des angeschlossenen Verstärkers an ein Potential, das derart gewählt ist, daß die Dioden durch die Spannungsdifferenz zwischen dem Meßpotential und der virtuellen Masse leitend werden (z.B. kleiner als das Referenzpotential). Sollen nur die Kreuzungswiderstände gemessen werden, dann wählt man das Meßpotential größer als das Referenzpotential, so daß die zur Überwachung geschalteten Dioden sperren.

Die aus der Widerstandsmessung resultierende Spannung liegt jetzt immer zwischen Masse und der Versorgungsspannung und kann damit leicht ohne negative Hilfsversorgungsspannungen ausgewertet werden.

Die einzelnen Ansteuervorrichtungen sind vorzugsweise mittels elektronisch gesteuerter Schalter umschaltbar. Hierdurch läßt sich das Meßverfahren z.B. durch Ansteuerung mittels eines Mikroprozessors, dynamisch verändern, so daß bei dem Verfahren beliebig an den Spalten- oder Zeilenleitern oder an Kombinationen aus beiden bestromt wird, während an den Zeilen- oder Spaltenleitern oder Kombinationen daraus gemessen wird.

So können beispielsweise Überwachungsdioden zwischen einzelnen Meßzyklen abgefragt werden, indem diese durch Umschalten der entsprechenden Ansteuervorrichtungen leitend geschaltet werden. Ebensogut lassen sich bei geeigneter Beaufschlagung der einzelnen Spalten- und Zeilenleitern Kurzschlüsse zwischen zwei Spalten- bzw. Zeilenleitern feststellen.

Dazu werden in einer Gruppe von drei Spalten- bzw. Zeilenleitern jeweils die beiden äußeren Leiter mit einer Meßspannung beaufschlagt. Von dem in der Mitte liegenden Leiter und den benachbarten Leitern fließt jetzt ein Strom durch die zwischen den Leitern liegenden Matrixwiderstände. Durch die an diesen (parallel geschalteten) Widerständen abfallende Spannung können Rückschlüsse auf Defekte in der Matrix und Kurzschlüsse zwischen den Kontakten gezogen werden.

Die Vorrichtung ist bevorzugt als anwendungsspezifische integrierte Schaltung ausgebildet.

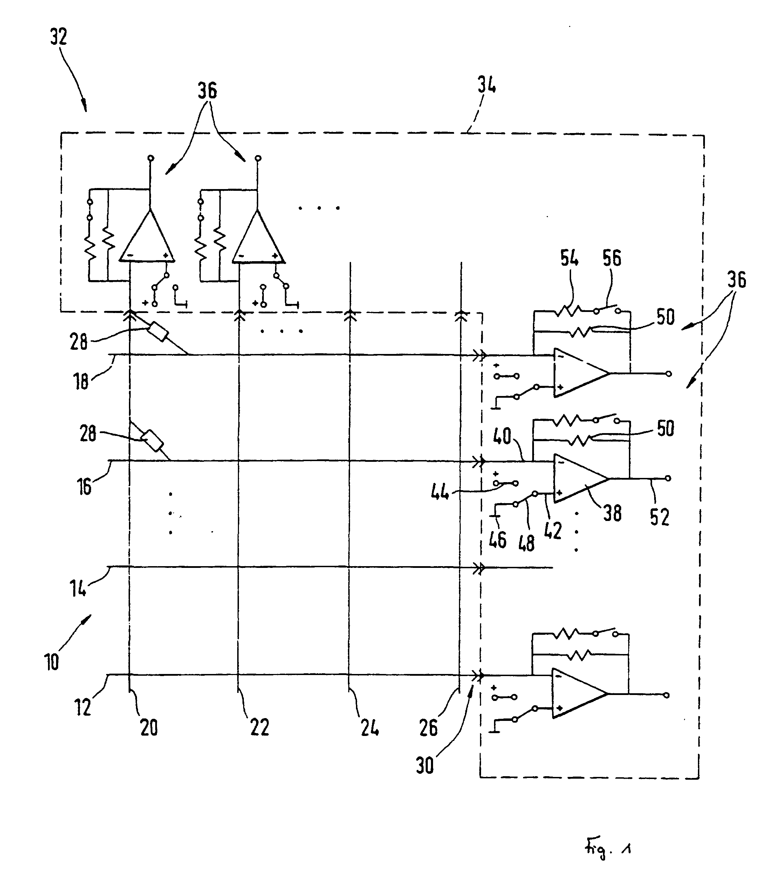

Im folgenden wird nun eine bevorzugte Ausgestaltung der Erfindung anhand der beiliegenden Figur 1 beschrieben. Diese zeigt einen schematischen Aufbau einer Vorrichtung zum Abfragen mehrerer Sensorelemente in Matrix-Verschaltung mit angeschlossener Sensormatrix.

Die Sensormatrix 10 weist mehrere Zeilenleiter 12, 14, 16, 18 sowie mehrere Spaltenleiter 20, 22, 24, 26 auf, wobei zwischen jeweils einem Zeilenleiter und einem Spaltenleiter eines der (als Widerstand dargestellten) Sensorelemente 28 verschaltet ist. Die Sensorelemente 28 können beispielsweise druck- oder temperaturabhängige Widerstände umfassen. Zur besseren Übersichtlichkeit der Figur sind lediglich zwei Sensorelemente 28 eingezeichnet, es ist jedoch für den Fachmann klar, daß entsprechende Sensorelemente 28 vorteilhaft auch zwischen den anderen Spalten- und Zeilenleitern verschaltet sind.

Die Sensormatrix ist über eine Steck- oder Klemmverbindung 30 mit der Vorrichtung 32 zum Abfragen der Sensorelemente verbunden. Diese umfaßt mehrere, vorzugsweise in einem gemeinsamen Gehäuse 34 angeordnete, Ansteuervorrichtungen 36, von denen jede über die Steck- oder Klemmverbindung 30 an jeweils einen Zeilen- bzw. Spaltenleiter 12-18, 20-26 anschließbar ist. Zur besseren Übersichtlichkeit der Figur sind auch hier lediglich einige der Ansteuervorrichtungen 36 dargestellt.

Jede Ansteuervorrichtung 36 umfaßt einen gegengekoppelten Operationsverstärker 38, dessen invertierender Eingang 40 an den jeweiligen Zeilen- bzw. Spaltenleiter 12-18, 20-26 anschließbar ist und dessen nichtinvertierender Eingang 42 zwischen einem Anschluß 44 einer Treiberspannung und einem Anschluß 46 eines Referenzpotentials umschaltbar ist. Die Umschaltung geschieht dabei vorzugsweise über einen elektronisch gesteuerten Schalter 48. Das Referenzpotential stellt eine virtuelle Masse dar, deren Potential zwischen der realen Masse und der Versorgungsspannung der Schaltung liegt, z.B. beider halben Versorgungsspannung.

Bei dieser Ausgestaltung nutzt man das Prinzip aus, daß ein solcher gegengekoppelter Operationsverstärker 38 versucht, die Spannungsdifferenz zwischen dem invertierenden und dem nicht invertierenden Eingang zu Null zu machen. Soll eine bestimmte Ansteuervorrichtung 36 demnach als Treiberzelle arbeiten, z.B. die an den Spaltenleiter 20 angeschlossene Ansteuervorrichtung, schaltet man den nicht-invertierenden Eingang 42 des jeweiligen Operationsverstärkers 38 auf den Anschluß 44 der Treiberspannung. Der Operationsverstärker 38 treibt dann über den Gegenkopplungswiderstand 50 die an dem invertierenden Eingang 40 angeschlossene Spalte 20.

Zum Abfragen der zwischen dem Spaltenleiter 20 und den verschiedenen Zeilenleitern 12-18 verschalteten Sensorelementen 28 müssen die restlichen Spaltenleiter 22-26 und die Zeilenleiter 12-18 auf das Referenzpotential gelegt werden. Hierzu werden die nicht-invertierenden Eingänge 42 der entsprechenden Operationsverstärker 38 auf den Anschluß 46 für die Referenzspannung geschaltet. Diese Operationsverstärker 38 arbeiten dann als Strom-Spannungswandler, die den über die jeweils angeschlossene Zeile bzw. Spalte fließenden Strom, d.h. den Strom, der über das zu messende Sensorelement 28 abfließt, in eine dem Widerstand des Sensorelements proportionale Ausgangsspannung am Ausgang 52 des Operationsverstärkers umwandelt.

Der Widerstandswert der Gegenkopplung der einzelnen Operationsverstärker 38 ist vorzugsweise veränderbar. Dies geschieht in der dargestellten Ausgestaltung durch einen zweiten Gegenkopplungswiderstand 54, der mittels eines elektronisch gesteuerten Schalters 56 zu dem ersten Gegenkopplungswiderstand 50 parallel hinzugeschaltet werden kann. Hierdurch läßt sich vorteilhaft die Meßempfindlichkeit der als Meßwandler geschalteten Ansteuervorrichtungen 36 verändern, so daß eine hohe Genauigkeit bei der Messung erreicht wird. Weiterhin läßt sich mit den variablen Gegenkopplungswiderständen an den als Treiberzellen geschalteten Ansteuervorrichtungen der in die Sensormatrix 10 hineinfließende Strom regeln.

Mit der vorgestellten Vorrichtung zum Abfragen mehrerer Sensorelemente ist ein möglicher Meßablauf wie folgt:

Zunächst legt man alle Zeilen- und Spaltenleiter durch Aufschalten der nicht-invertierenden Eingänge 42 der Operationsverstärker 38 auf den jeweiligen Anschluß 46 auf das Referenzpotential, d.h. die virtuelle Masse. Die Sensormatrix 10 ist jetzt unbestromt im Ruhezustand.

Zum Beginn des Meßzyklus wir an einer Spalte 20 der nicht-invertierende Eingang 42 des Operationsverstärkers 38 mit dem Anschluß 44 der Treiberspannung beschaltet. Jetzt können alle Widerstandswerte der zwischen dem Spaltenleiter 20 und den verschiedenen Zeilenleitern 12-18 verschalteten Sensorelemente 28 nacheinander bestimmt werden.

Anschließend wird der nicht-invertierende Eingang 42 des an den Spaltenleiter 20 angeschlossenen Operationsverstärkers 38 wieder auf das Referenzpotential geschaltet und die nächste Spalte 22 angesteuert. Auf diese Weise werden alle Spalten nacheinander abgearbeitet, so daß am Ende des Meßzyklus die Widerstandswerte sämtlicher Sensorelemente 28 bestimmt sind. In einem zweiten Meßzyklus werden dann, nach Verändern der Gegenkopplungswiderstände an den Operationsverstärkern 38, beispielsweise sämtliche Sensorelemente in einem anderen Meßbereich abgefragt. Durch Vergleich der beiden gemessenen Widerstandswerte können bereits Rückschlüsse auf Defekte in der Matrix gezogen werden.

Ebensogut lassen sich bei geeigneter Beaufschlagung der einzelnen Spalten- und Zeilenleitern Kurzschlüsse zwischen zwei Spalten- bzw. Zeilenleitern feststellen. Dazu werden in einer Gruppe von drei Spalten- bzw. Zeilenleitern jeweils die beiden äußeren Leiter mit einer Meßspannung beaufschlagt. Von dem in der Mitte liegenden Leiter und den benachbarten Leitern fließt jetzt ein Strom durch die zwischen den Leitern liegenden Matrixwiderstände. Durch die an diesen (parallel geschalteten) Widerständen abfallende Spannung können Rückschlüsse auf Defekte in der Matrix und Kurzschlüsse zwischen den Kontakten gezogen werden.

## Patentansprüche

1. Vorrichtung zum Abfragen mehrerer Sensorelemente (28) in Matrix-Verschaltung, wobei die Matrix-Verschaltung n Zeilenleiter (12, 14, 16, 18) und m Spaltenleiter (20, 22, 24, 26) aufweist, **gekennzeichnet durch** n+m Ansteuervorrichtungen (36), die an die n Zeilenleiter und an die m Spaltenleiter anschließbar sind, wobei jede Ansteuervorrichtung derart individuell umschaltbar ausgestaltet ist, daß sie in einem ersten Modus als Treiberzelle zum Beaufschlagen des anzuschließenden Zeilen- bzw. Spaltenleiters mit einer elektrischen Treibspannung und in einem zweiten Modus als Meßwandler zum Verarbeiten des Signals an dem anzuschließenden Spalten- bzw. Zeilenleiter arbeitet.

2. Vorrichtung nach Anspruch 1, **dadurch gekennzeichnet, daß** jede Ansteuervorrichtung einen gegengekoppelten Verstärker umfaßt, wobei der invertierende Eingang des Verstärkers an den jeweiligen Zeilen- bzw. Spaltenleiter anschließbar ist und der nicht-invertierende Eingang des Verstärkers zwischen einer Treiberspannung und einem Referenzpotential umschaltbar ist.

3. Vorrichtung nach Anspruch 2, **dadurch gekennzeichnet, daß** der gegengekoppelte Verstärker einen linearen oder logarithmischen Operationsverstärker umfaßt.

4. Vorrichtung nach einem der Ansprüche 2 oder 3, **dadurch gekennzeichnet, daß** der Widerstandswert eines Gegenkopplungswiderstands, der bei jedem gegengekoppelten Verstärker zwischen dem invertierenden Eingang und dem Ausgang des Verstärkers verschaltet ist, veränderbar ist.

5. Vorrichtung nach Anspruch 4, **dadurch gekennzeichnet, daß** die Veränderung des Widerstandswerts des Gegenkopplungswiderstands durch eine Parallelschaltung von mehreren Einzelwiderständen erfolgt

6. Vorrichtung nach Anspruch 5, **dadurch gekennzeichnet, daß** die Parallelschaltung der verschiedenen Einzelwiderstände mittels elektronisch gesteuerter Schalter erfolgt.

7. Vorrichtung nach einem der Ansprüche 2 bis 5, **dadurch gekennzeichnet, daß** das Referenzpotential zwischen der Masse und der Versorgungsspannung der Schaltung liegt.

8. Vorrichtung nach einem der vorhergehenden Ansprüche, **dadurch gekennzeichnet, daß** die einzelnen Ansteuervorrichtungen mittels elektronisch gesteuerter Schalter umschaltbar sind.

9. Vorrichtung nach einem der vorhergehenden Ansprüche, **dadurch gekennzeichnet, daß** die Vorrichtung als anwendungsspezifische integrierte Schaltung ausgebildet ist.

## Claims

1. Device for interrogating a plurality of sensor elements (28) in a matrix interconnection, the matrix interconnection having n row conductors (12, 14, 16, 18) and m column conductors (20, 22, 24, 26), **characterized by** n+m drive devices (36) which can be connected to the n row conductors and to the m column conductors, each drive device being configured in such a manner that it can be switched over individually and, in a first mode, operates as a driver cell,for applying an electrical driving voltage to the row or column conductor to be connected and, in a second mode, operates as a measuring transducer for processing the signal on the column or row conductor to be connected.

2. Device according to claim 1, **characterized in that** each drive device comprises a negative feedback amplifier, it being possible for the inverting input of the amplifier to be connected to the respective row or column conductor and for the non-inverting input of the amplifier to be switched over between a driver voltage and a reference potential.

3. Device according to claim 2, **characterized in that** the negative feedback amplifier comprises a linear or logarithmic operational amplifier.

4. Device according to either of claims 2 and 3, **characterized in that** it is possible to change the resistance of a negative feedback resistor that, in each negative feedback amplifier, is connected up between the inverting input and the output of the amplifier.

5. Device according to claim 4, **characterized in that** the resistance of the negative feedback resistor is changed by a plurality of individual resistors being connected in parallel.

6. Device according to claim 5, **characterized in that** the various individual resistors are connected in parallel by means of electronically controlled switches.

7. Device according to one of claims 2 to 5, **characterized in that** the reference potential is between earth and the supply voltage of the circuit.

8. Device according to one of the preceding claims, **characterized in that** the individual drive devices can be switched over by means of electronically controlled switches.

9. Device according to one of the preceding claims, **characterized in that** the device is in the form of an application-specific integrated circuit.

## Revendications

1. Dispositif pour interroger plusieurs éléments de détection (28) en connexion en matrice, la connexion en matrice comportant n conducteurs de ligne (12, 14, 16, 18) et m conducteurs de colonne (20, 22, 24, 26), **caractérisé par** n+m dispositifs de commande pouvant être raccordés aux n conducteurs de ligne et aux m conducteurs de colonne, chaque dispositif de commande étant réalisé de manière à pouvoir être commuté individuellement de manière telle qu'il fonctionne dans un premier mode en tant que cellule pilote pour alimenter le conducteur de ligne resp. de colonne à raccorder avec une tension de commande électrique et, dans un deuxième mode, en tant que transformateur de mesure pour traiter le signal du conducteur de ligne resp. de colonne à raccorder.

2. Dispositif selon la revendication 1, **caractérisé en ce que** chaque dispositif de commande comprend un amplificateur à contre-réaction, l'entrée inversée de l'amplificateur pouvant être raccordée au conducteur en ligne resp. en colonne respectif et l'entrée non inversée de l'amplificateur pouvant être commutée entre une tension de commande et un potentiel de référence.

3. Dispositif selon la revendication 2, **caractérisé en ce que** l'amplificateur à contre-réaction comprend un amplificateur opérationnel linéaire ou logarithmique.

4. Dispositif selon l'une des revendications 2 ou 3, **caractérisé en ce que** la valeur de résistance d'une résistance de contre-réaction qui est connectée, pour chaque amplificateur à contre-réaction, entre l'entrée inversée et la sortie de l'amplificateur, est modifiable.

5. Dispositif selon la revendication 4, **caractérisé en ce que** la modification de la valeur de résistance de la résistance de contre-réaction est réalisée par un montage en parallèle de plusieurs résistances distinctes.

6. Dispositif selon la revendication 5, **caractérisé en ce que** le montage en parallèle des différentes résistances distinctes se fait au moyen de commutateurs commandés électroniquement.

7. Dispositif selon l'une des revendications 2 à 5, **caractérisé en ce que** le potentiel de référence est situé entre la masse et la tension d'alimentation du circuit.

8. Dispositif selon l'une des revendications précédentes, **caractérisé en ce que** les différents dispositifs de commande peuvent être commutés au moyen de commutateurs commandés électroniquement.

9. Dispositif selon l'une des revendications précédentes, **caractérisé en ce que** le dispositif est réalisé en tant que circuit intégré spécifique à chaque application.
